# EUROPEAN PATENT APPLICATION

(11) **EP 2 387 236 A1**
(43) Date of publication of application: **16.11.2011**
(21) Application number: 11164452.2
(22) Date of filing: 02.05.2011
(51) Int. Cl.: H04N 5/64

(54) **Receiving device and manufacturing method thereof**

(30) Priority: 10.05.2010 JP 2010108734
(71) Applicant: Mitsumi Electric Co., Ltd., Tama-shi, Tokyo 206-8567 (JP)
(72) Inventor: Arata, Torao, Tokyo 206-8567 (JP)
(74) Representative: Kopf, Korbinian Paul

(57) **Abstract**

A receiving device includes a board on which components for receiving a digital broadcasting signal are mounted; a non-conductive casing configured to accommodate the board; and a non-conductive lid configured to cover the board and being connected to the non-conductive casing, wherein the board has a conductive portion located in an edge portion of the board facing a gap formed in a connecting portion between the casing and the lid.

## Description

### CROSS-REFERENCE TO RELATED APPLICATIONS

This patent application is based upon and claims the benefit of priority of Japanese Patent Application No. 2010-108734 filed on May 10, 2010, the entire contents of which are incorporated herein by reference.

### BACKGROUND OF THE INVENTION

### 1. Field of the Invention

The present invention generally relates to a receiving device including a board in which components for receiving digital broadcasting signals are installed.

### 2. Description of the Related Art

In recent years, a broadcasting method for television broadcasting is changing from an analog method to a digital method. Along with this change, a receiving device which receives a broadcast signal of the digital method such as a digitized terrestrial broadcast and converts the broadcast signal to a signal which can be heard and viewed is a commercial reality.

Patent Document 1 discloses an electronic device including a metal cover 117, a chassis 115, a power board 112 and a signal processing board 113 both of which boards are accommodated between the metal cover 117 and the chassis 115.

[Patent Document 1] Japanese Laid-open Patent Publication No. 2007-324858

In the above electronic device used as a receiving device, it is possible to prevent static electric charges from intruding into the inside of the electronic device by the metal cover and the chassis which are made of a conductive metal. However, in order to reduce the weight and reduce the cost, the conductive metal used for the cover and the chassis may be changed to a non-conductive material. In this case, there must be a countermeasure for protecting the integrated components of the receiving device from the static charge intruding from the outside of the receiving device. For example, it is cumbersome for a user to see or hear disturbed images or sound caused by influence of static charge on the integrated components.

### SUMMARY OF THE INVENTION

Accordingly, embodiments of the present invention may provide a novel and useful receiving device solving one or more of the problems discussed above by protecting integrated components from static charge even though a casing (e.g. cover and chassis) is non-conductive.

More specifically, the embodiments of the present invention may provide a receiving device including a board on which components for receiving a digital broadcasting signal are mounted; a non-conductive casing configured to accommodate the board; and a non-conductive lid configured to cover the board and being connected to the non-conductive casing, wherein the board has a conductive portion located in an edge portion of the board facing a gap formed in a connecting portion between the casing and the lid.

Additional objects and advantages of the embodiments are set forth in part in the description which follows, and in part will become obvious from the description, or may be learned by practice of the invention. The objects and advantages of the invention will be realized and attained by means of the elements and combinations particularly pointed out in the appended claims. It is to be understood that both the foregoing general description and the following detailed description are exemplary and explanatory and are not restrictive of the invention as claimed.

### BRIEF DESCRIPTION OF THE DRAWINGS

FIG. 1 is an exploded perspective view of a receiving device of an Embodiment.
FIG. 2 is another exploded perspective view of the receiving device of the Embodiment.
FIG. 3 is a cross-sectional view of the receiving device 100 illustrated in FIG. 1 taken along a line A-A.
FIG. 4 illustrates an example of a board layout of a digital board 140 on a side of a lid 120.
FIG. 5 illustrates an example of a board layout of the digital board 140 on a side of a casing body 110.
FIG. 6 is a cross-sectional view of an example receiving device.
FIG. 7 illustrates an example digital board.

### DETAILED DESCRIPTION OF THE PREFERRED EMBODIMENTS

Hereinafter, reference symbols typically designate as follows:
20: B-CAS card;
43, 44, 45: RCA terminal;
100: Receiving device;
110: Casing body;
111: Insertion hole;
112: Casing body connection end;
120: Lid;
121: lid connection end;
130: Power board;
140: Digital board;
141: Pin;
142: Piercing hole;
143: Board end;
144: Through hole;
145, 146: Port for a debug circuit
147: Board peripheral portion;
150: B-CAS card connector;
151: Card insertion port;
160: Tuner;
201, 202, 203, 204, 205, 206: Conductive pattern;
210: Gap;
210a: Outer connecting edge; and
210b: Inner connecting edge.

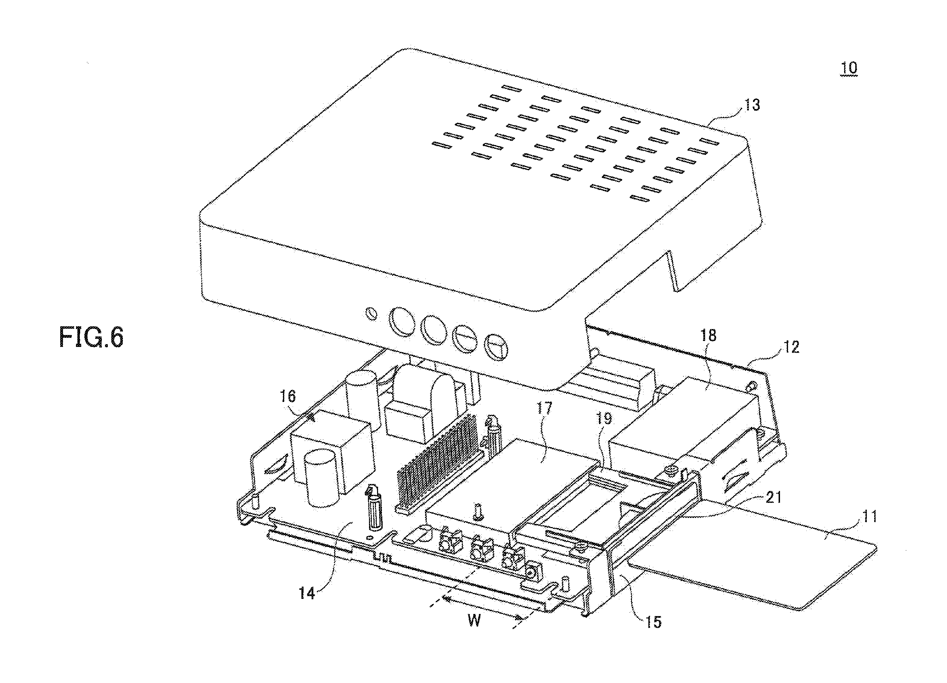

FIG. 6 is a cross-sectional view of an example receiving device. When a contact-type IC card 11 for receiving the digital broadcasting signal is inserted, the above receiving device 10 functions for receiving the digital broadcasting signal.

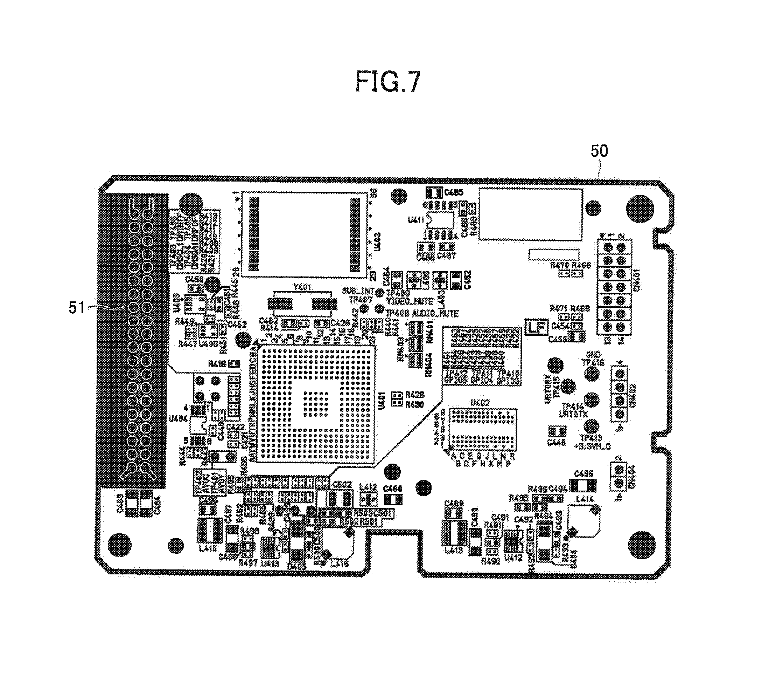

The receiving device 10 includes a body 12 and a lid 13. An analog board 14 and a digital board 50 illustrated in FIG. 7 are accommodated in the body 12 (the digital board 50 is omitted in FIG. 6). A card insertion port 15 is formed in the body 12. The analog board 14 includes a power supply circuit 16, a connector 17, a tuner 18 and a guide member 19 for guiding the contact-type IC card 11 to the connector 17. The length W of the guide member 19 is designed so as to accommodate the entire contact-type IC card 11 into the body 12 when the contact-type IC card 11 is inserted into the connector 17. The guide member 19 is installed on the analog board 14 so that a card insertion slit 21 is arranged in the card insertion port 15.

In the above receiving device 10, the body 12 accommodating the digital board 50 (FIG. 7) between the connector 17 and the lid 13 is formed of a conductive metal.

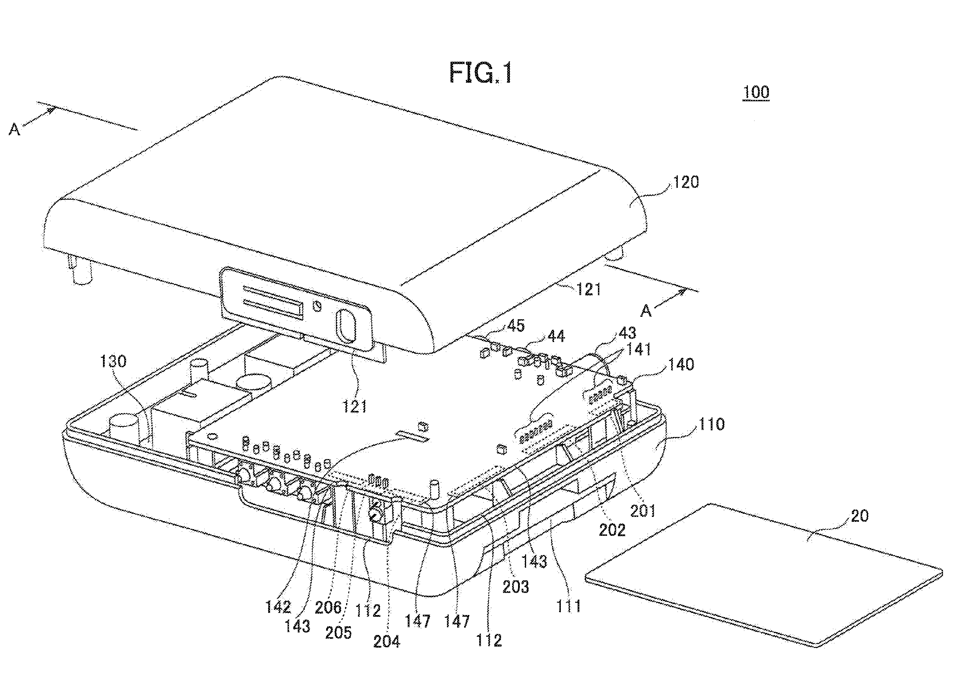

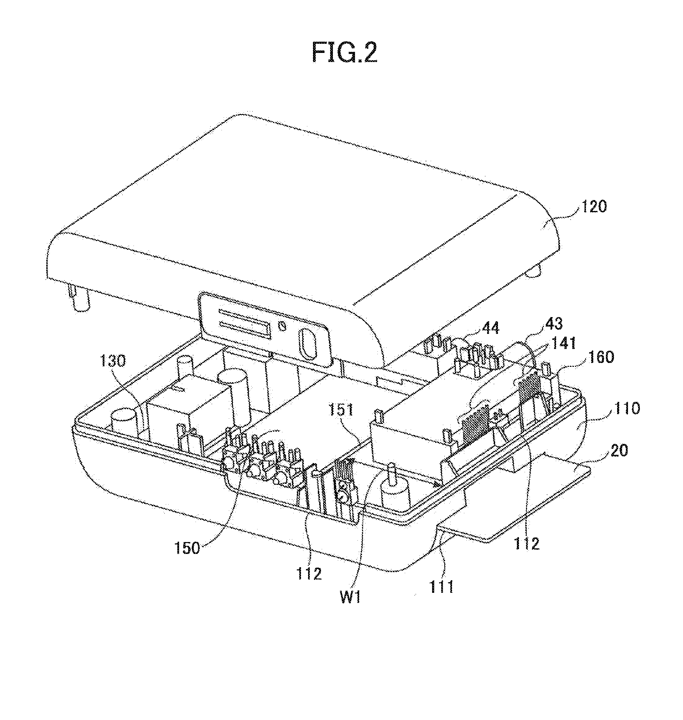

A description is given bellow, with reference to the FIG. 1 through FIG. 5 of the Embodiment of the present invention. FIG. 1 is an exploded perspective view of a receiving device 100 of the Embodiment. FIG. 2 is another exploded perspective view of the receiving device 100 of the Embodiment. Referring to FIG. 2, a digital board 140 is omitted.

The receiving device 100 of the Embodiment may be a set top box which receives a digital broadcasting signal or a digital tuner. When a contact-type integrated circuit (IC) called B-CAS card 20 is inserted in the receiving device 100, the receiving device can perform a receiving function. An IC chip (not illustrated) is installed in the B-CAS card 20. An identification number and an encryption key are unique to the B-CAS card 20 and stored in the IC chip of the B-CAS card.

The receiving device 100 includes a casing body 110 and a lid 120. A power board 130 and the digital board 140 are accommodate in the casing body 110. The casing body 110 has an insertion hole 111 through which the B-CAS card 20 is inserted. The B-CAS card 20 is inserted into the insertion hole and connected to a B-CAS card connector 150.

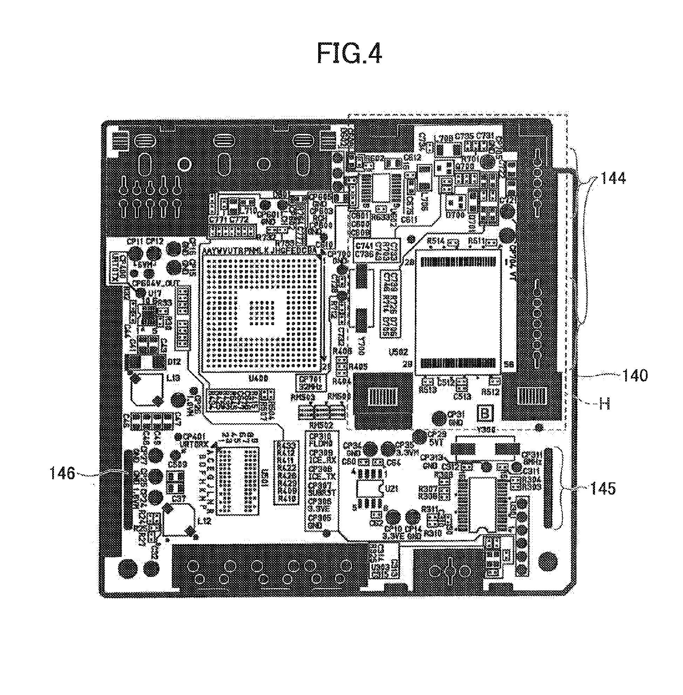

The power board 130 includes a power supply circuit formed mainly of an analog circuit and the B-CAS card connector 150. The digital board 140 of the Embodiment is a double-surface mount substrate and has various digital circuits such as a central processing unit (CPU) and a memory chip as illustrated FIG. 4 to be described below. On a side of the digital board 140 opposite to the lid 120, a tuner 160 is mounted for receiving the digital broadcasting signal. Pins 141 are for the tuner 160.

The digital broadcasting signal is input in the tuner 160 via an antenna or a cable line connected to the receiving device 100. A frequency conversion unit of the tuner 160 converts the digital broadcasting signal to an intermediate frequency signal (IF signal) including an intermediate frequency corresponding to a signal component of a desired channel to be watched or heard. The channel for the tuner 160 is designated based on selection channel information input from a user input device (not illustrated) such as a remote controller and a touch panel display with which the user can select the channel to be received. When the user selects the channel using the user input device (not illustrated), the tuner 160 tunes the frequency corresponding to the selected channel.

In addition to the tuner 160, electronic components mounted on the digital board 140 may be a decoder IC and a power supply circuit which supplies a constant direct current voltage to the electronic components mounted on the digital board 140 such as the tuner 160 and the decoder IC. The decoder IC is an integrated circuit converting an IF signal tuned by the tuner 160 to an analog composite image signal and an analog audio signal. These image and audio signals are output from RCA terminals 43 through 45 mounted on the digital board 140.

Referring to FIG. 2, the receiving device 100 of the Embodiment includes the tuner 160 between the insertion hole 111 of the casing body 110 and a card insertion port 151 of the B-CAS card connector 150. The length W1 between the insertion hole 111 of the casing body 110 and the card insertion port 151 of the B-CAS card connector 150 is designed so that the entire B-CAS card 20 is accommodated in the casing body 110 when the B-CAS card 20 is inserted into the B-CAS card connector 150.

With the Embodiment, the tuner 160 is arranged in a space between the insertion hole 111 of the casing body 110 and the card insertion port 151 of the B-CAS card connector 150. Thus, the receiving device 100 can be made small.

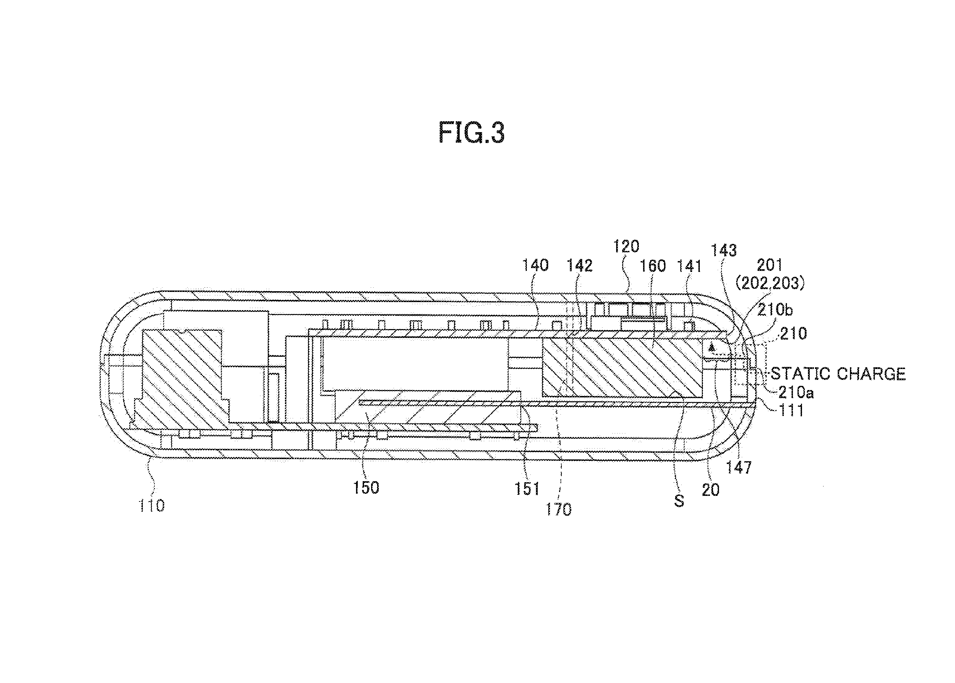

FIG. 3 is a cross-sectional view of the receiving device 100 illustrated in FIG. 1 taken along a line A-A. FIG. 3 illustrates a state where the B-CAS card 20 is inserted into the receiving device 100. With the Embodiment, the tuner 160 is arranged so as not to contact the B-CAS card 20 when the B-CAS card 20 is inserted into the B-CAS card connector 150. The tuner 160 is arranged so as not to overlap the insertion hole 111 and the card insertion port 151 in the direction of inserting the B-CAS card 20. With the Embodiment, the B-CAS card 20 can be inserted into the B-CAS card connector 150 without being interrupted from insertion into the B-CAS card connector 150.

FIG. 4 illustrates an example of a board layout of the digital board 140 on the side of the lid 120. On the digital board 140 of the Embodiment, the tuner 160 is mounted on a second surface opposite to a first surface (the surface on the side of the lid 120) illustrated in FIG. 1.

With the Embodiment, the tuner 160 is arranged so that the side having more pins than the other side is positioned in the vicinity of and inside an edge of the digital board 140. Through holes 144 are formed to cause the pins of the tuner 160 to penetrate through the digital board 140 in the vicinity of and inside the edge of the digital board 140. The tuner 160 is surface mounted on the digital board 140 by inserting the pins 141 into the through holes 144. With the Embodiment, by arranging the side of the tuner 160 having many pins in the vicinity of and inside the edge of the digital board 140, it is possible to prevent the through holes 144 from being formed in the vicinity of the digital board 140. Therefore, the IC connected to many signal lines can be surface-mounted on an area H (see FIG. 4) on a back side of an area in which the tuner 160 is surface-mounted thereby achieving high integration of the digital board 140.

With the Embodiment, the tuner 160 is mounted on the digital board 140. Image signal lines in the vicinity of the tuner 160 may be connected to the digital board 140 and noise in the image signal can be reduced. Further, it is possible to reduce the number of the signal lines connecting the power board 130 to the digital board 140. Therefore, the number of pins of the connector connecting the power board 130 to the digital board 140 can be made small.

A port for a debug circuit is provided on the edge of the digital board 140 of the Embodiment. With the Embodiment, the digital board 140 can be made small or miniaturized.

Referring to FIG. 4, the ports 145 and 146 for connecting to the debug circuit are located on the digital board 140. The ports for the debug circuit 145 and 146 are formed inside regions where components are prevented from being located on both ends of the digital board 140. The regions where components are prevented from being located on the both ends of the digital board 140 are provided for supporting the digital board 140 in a manufacturing process of the digital board 140. It is prohibited to mount the components on the regions. The number of the ports 145 and 146 for the debug circuits is the same as the number of the signals necessary for debugging the IC mounted on the digital board 140. Therefore, the numbers of the ports 145 and 146 for the debug circuit become relatively smaller than the number of pins for an ordinarily used debug connector.

When performing debugging of the digital board 140, a debugging circuit is inserted into the digital board 140 to thereby debug the digital board 140. With this structure, the debugging is performed for each digital board 140 after mass-producing the digital boards 140. Therefore, when there is a defect in the product, it is possible to check for the defect in each digital board 140 as products.

Meanwhile, as illustrated in FIG. 1 through FIG. 3, the digital board 140 on which the electronic components are mounted is accommodated and covered by the casing body 110 and the lid 120. The casing body 110 is non-conductive. The lid 120 is also non-conductive. The non-conductive material may be a resin.

As illustrated in FIG. 1 and FIG. 3, when the lid is attached to the casing body 110, a connection end 112 of the casing body 110 for connecting the lid 120 and a connection end 121 of the lid 120 for connecting the casing body 110 are not melted and joined. Therefore, a small gap 210 may be formed to allow intrusion of static charge from the outside of the receiving device 100. The gap 210 is especially prone to be formed when the lid 120 is attached to the casing body 110 with an attaching member such as a snap fit or a screw.

As illustrated in FIG. 1 and FIG. 3, in order to protect electronic components mounted on the digital board 140 from the static charge intruding from the gap 210 formed in the joined portion between the casing body 110 and the lid 120, plural conductive patterns 201 through 206 are formed to face the gap 210 in a board peripheral portion 147 interposed between the mounted portion of the electronic components and a board end 143 of the digital board 140. The mounted portion of the electronic components is a land or a through hole formed on the digital board 140 in order to mount the electronic components.

The conductive patterns 201 through 206 are formed on a board surface on one side opposite to the gap 210, i.e., the lower surface of the digital board 140 illustrated in FIG. 3. The conductive patterns 201 through 203 illustrated in FIG. 3 face an inner connecting edge 210b which is an outlet of the intruding path of the static charge having entered from the gap 210.

By supporting the digital board 140 with the casing body 110 so that a conductive portion such as the conductive pattern 201 located in the board peripheral portion 147 of the digital board 140 faces the gap 210, the static charge having intruded from the outer connecting edge 210a of the gap 210 and being emitted from the inner connecting edge 210b can be introduced into the conductive pattern 201 or the like, so that it is possible to protect the electronic components mounted on the digital board 140 from the static charge. It is sufficient that the conductive portion such as the conductive pattern substantially faces the gap 210 and the conductive portion 201 may not immediately face the gap 210.

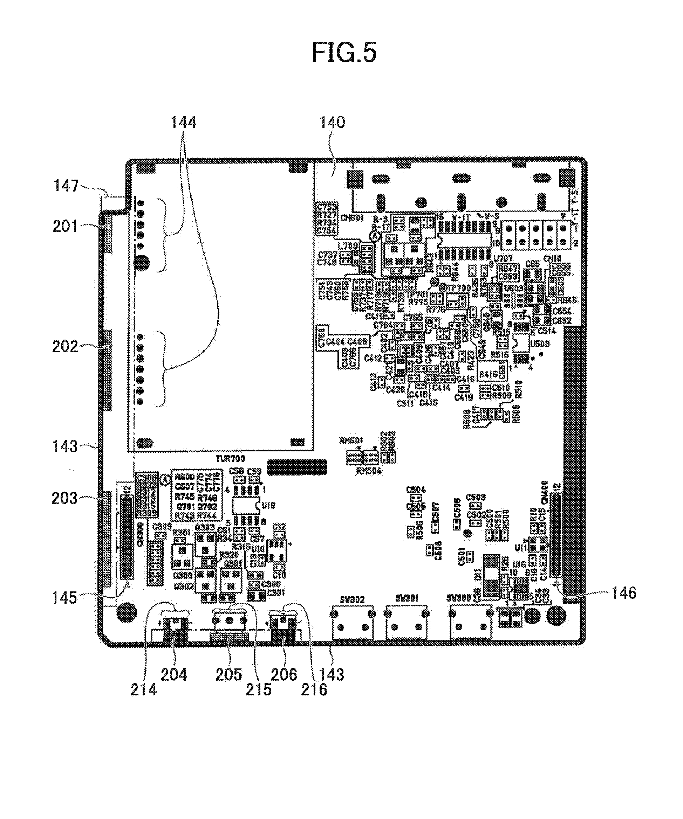

FIG. 5 illustrates an example of a board layout on a side of the casing body 110 of the digital board 140. The conductive patterns 201 and 202 are formed in the board peripheral portion 147 interposed between the board end 143 and the through hole 144 in which the pins of the tuner 160 are mounted. With this the static charge having intruded from the gap 210 is guided by the conductive patterns 201 and 202. Therefore, the tuner 160 can be protected from the static charge.

In a manner similar thereto, the conductive pattern 203 is formed in the board peripheral portion 147 interposed between the board end 143 and the port for the debug circuit 145. Further, the conductive patterns 204 through 206 are formed in the board peripheral portion 147 interposed between the board end 143 and a portion for mounting the other electronic components such as lands 214 and 216 for light-emitting diodes and through holes 215 of a transistor. The electronic components are protected from the static charge having intruded from the gap 210 by these conductive patterns 201 to 206.

The conductive patterns 201 through 206 may be formed by a conductive layer such as a copper foil formed on the digital board 140. This is because the conductive patterns 201 through 206 are easily formed using an etching resist.

By connecting the conductive portion of the conductive pattern 201 or the like to a ground connection of the digital board 140, the static charge having intruded from the gap 210 can be certainly discharged to ground. Thus, a countermeasure against the static charge becomes effective. Specifically, when the ground connection connected to the conductive portion such as the conductive pattern 201 is connected to a ground layer in which an electric potential inside the digital board 140 is stabilized, it is possible to further effectively perform the countermeasure against the static charge.

For example, the conductive portion mounted on the board peripheral portion 147 is not limited to the conductive pattern formed by etching to attract the static charge.

The conductive portion such as the conductive pattern 201 to 206 may not be divided into plural parts as described in the above Embodiment and may be located along an entire periphery of the digital board 140.

Thus, with the Embodiment, even if a casing is non-conductive, integrated components are protected from static charge.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority or inferiority of the invention. Although the embodiments of the present invention have been described in detail, it should be understood that the various changes, substitutions, and alterations could be made hereto without departing from the spirit and scope of the invention.

## Claims

1. A receiving device comprising:
a board on which components for receiving a digital broadcasting signal are mounted;
a non-conductive casing configured to accommodate the board; and
a non-conductive lid configured to cover the board and being connected to the non-conductive casing,
wherein the board has a conductive portion located in an edge portion of the board facing a gap formed in a connecting portion between the casing and the lid.

2. The receiving device according to claim 1,
wherein the conductive portion is positioned on a surface of the edge portion of the board.

3. The receiving device according to claim 1,
wherein the conductive portion is a conductive pattern formed on a surface of the board.

4. The receiving device according to claim 1,
wherein the conductive portion is connected to a ground of the board.

5. The receiving device according to claim 1,
wherein the conductive portion is formed in a region interposed between a mounted portion of the components and a board end.

6. A manufacturing method of a receiving device comprising:
forming a board on which components for receiving a digital broadcasting signal are mounted and a conductive portion is positioned in an edge portion facing a gap formed in a connecting portion between a casing and a lid; and
forming a non-conductive casing configured to accommodated the board;
forming a non-conductive lid configured to cover the board and be connected to the non-conductive casing; and
connecting the non-conductive casing and the non-conductive lid while interposing the board between the non-conductive casing and the non-conductive lid.

7. The manufacturing method according to claim 6,
wherein the conductive portion is positioned on a surface of the edge portion of the board.

8. The manufacturing method according to claim 6,
wherein the conductive portion is a conductive pattern formed on a surface of the board.

9. The manufacturing method according to claim 6,
wherein the conductive portion is connected to a ground of the board.

10. The manufacturing method according to claim 6,
wherein the conductive portion is formed in a region interposed between a mounted portion of the components and a board end.
